# EUROPÄISCHE PATENTSCHRIFT

(11) **EP 1 504 836 B1**
(45) Veröffentlichungstag und Bekanntmachung des Hinweises auf die Patenterteilung: **11.06.2008**
(21) Anmeldenummer: 03019155.5
(22) Anmeldetag: 25.08.2003
(51) Int. Cl.: B23B 31/12

(54) **Schnellspannbohrfutter**
Quick action drill chuck
Mandrin à changement rapide

(30) Priorität: 31.07.2003 DE 10335500
(43) Veröffentlichungstag der Anmeldung: 09.02.2005
(73) Patentinhaber: Röhm GmbH, 89567 Sontheim (DE)
(72) Erfinder: Mack, Hans-Dieter, 89567 Sontheim (DE)
(74) Vertreter: Hentrich, Swen

(56) Entgegenhaltungen:
- EP-A- 1 055 472
- DE-A- 3 501 870
- DE-U- 9 409 258

## Beschreibung

Die Erfindung betrifft ein Schnellspannbohrfutter mit einem eine Spindelaufnahme aufweisenden Futterkörper und einer gegenüber dem Futterkörper axial unverschiebbar gelagerten Spannhülse, in der in geneigt zur Futterachse verlaufenden Führungsschlitze Spannbacken geführt sind, die an einem Mitnehmer gelagert sind, der koaxial zur Futterachse verstellbar und mittels einer in einem ersten Gewinde gegenüber dem Futterkörper axial verstellbaren Spannzangen in seiner axialen Lage feststellbar ist, und mit einem der radialen Verstellung der Spannsegmente der Spannzange dienenden Konusring.

Ein derartiges Schnellspannbohrfutter ist aus der DE 94 09 258 U1 bekannt, bei dem die Spannhülse drehfest mit dem Futterkörper verbunden ist und eine Öffnung aufweist, durch die ein Schlüssel eingesetzt werden kann, um über eine Kegelradverzahnung einen im Futterkörper gelagerten Gewindering zu verdrehen, in dessen Gewinde die Spannzange mit dem ersten Gewinde eingreift und so durch Verdrehen des Gewinderinges axial verstellt werden kann, um den Mitnehmer zu klemmen oder frei zu geben. Dieses bekannte Schnellspannbohrfutter weist den Vorteil auf, daß bei freigegebenem Mitnehmer der Schaft eines Werkzeuges in die in der Spannhülse ausgebildete Werkzeugaufnahme eingesteckt werden kann, wobei die Spannbacken selbsttätig axial so weit zurückweichen, bis diese am Außenumfang des Schaftes zur Anlage kommen. Nachteilig bei diesem bekannten Schnellspannbohrfutter ist jedoch, daß zur Erzielung einer ausreichenden Spannkraft unverändert die Verwendung eines Schlüssels erforderlich ist, so daß sich durch dieses Schnellspannbohrfutter auf den gesamten Spann- beziehungsweise Lösevorgang gesehen nur ein geringer Zeitvorteil ergibt, da zwar die Spannbacken schnell in die erforderliche Position zum Klemmen des Werkzeugschaftes gebracht werden können, zur Fixierung dieser Stellung aber zunächst der Schlüssel ergriffen und in die Schlüsselöffnung eingesetzt und dann verdreht werden muß, um diesen nach erfolgter Spannung aus der Schlüsselöffnung zu entfernen und wieder auffindbar zu deponieren.

Der Erfindung liegt daher die Aufgabe zugrunde, ein Schnellspannbohrfutter der eingangs genannten Art als schlüsselloses Futter zu gestalten.

Diese Aufgabe wird nach der Erfindung bei einem Schnellspannbohrfutter der eingangs genannten Art dadurch gelöst, daß die Spannhülse verdrehbar gegenüber dem Futterkörper gelagert und drehschlüssig mit der Spannzange gekoppelt ist, wobei zur drehschlüssigen Kopplung der Spannhülse mit der Spannzange der Konusring vorgesehen ist.

Durch diese Gestaltung bietet sich die Möglichkeit, wie bei bekannten handspannenden Bohrfuttern den Futterkörper gegen Drehen zu sichern und mittels der von Hand zu ergreifenden Spannhülse die Drehbewegungen auszuführen, die zum Öffnen und Schließen des Schnellspannbohrfutters erforderlich sind. Der Nutzer des Schnellspannbohrfutters kann daher dieses in der ihm von anderen Bohrfuttern vertrauten Weise bedienen, so daß die positive Eigenschaft der Schnellspannung nicht mit einer komplizierteren Betätigung des Bohrfutters erkauft werden muß.

Im Rahmen der Erfindung ganz besonders bevorzugt ist, wenn zur drehschlüssigen Kopplung der Spannhülse mit der Spannzange ein der radialen Verstellung der Spannsegmente der Spannzange dienender Konusring vorgesehen ist. Durch diesen Konusring wird in einfacher Weise der radiale Abstand zwischen der Spannzange und der Spannhülse überbrückt und zugleich mit dem Konus die Steuerkurve zur Verfügung gestellt, die erforderlich ist, um die Spannsegmente der Spannzange zwischen der Spannstellung und der Lösestellung zu verstellen.

Die drehschlüssige Kopplung zwischen der Spannzange und dem Konusring wird dabei in einfacher Weise dadurch hergestellt, daß die Spannzange mit einem Führungszapfen in eine axial orientierte Nut des Konusringes eingreift.

Wenn der Mitnehmer gegen die Kraft einer Feder an dem Konusring abgestützt ist, bietet sich der Vorteil, daß die Spannbacken stets in Richtung Spannstellung mit einer Kraft beaufschlagt sind, so daß nach dem Einsetzen des Schaftes eines Werkzeuges zunächst bereits eine erste Sicherung des Schaftes durch die Spannbacken mittels der Feder erreicht ist.

Günstig ist weiterhin, wenn der Konusring am axial vorderen Ende einen Ringbund zur radialen Führung des Mitnehmers aufweist, da so die Baulänge des Mitnehmers verkürzt werden kann, da dieser nicht am axial rückwärtigen Ende der Spannzange radial geführt werden muß. Zusätzlich ist durch den Ringbund auch ein Anschlag für die Spannzange bereitgestellt, um zu verhindern, daß diese aus dem ersten Gewinde geschraubt werden kann.

Um eine axiale Sicherung des Mitnehmers mittels eines Formschlusses bereitstellen zu können, ist vorgesehen, daß an dem Mitnehmer in Umfangsrichtung verlaufende Rillen ausgebildet sind zum Zusammenwirken mit an den Spannsegmenten ausgebildeten Zahnreihen.

Bevorzugt ist dabei, wenn die Rillen zu einem Mitnehmergewinde zusammengefasst sind mit einem gegenüber dem ersten Gewinde gleichen Drehsinn, da so bei einer fortgesetzten Verdrehung der Spannzange, die dem Pressen der Spannbacken in die Führungsschlitze der Spannhülse dient, auch der Mitnehmer gegenüber der Spannzange verdreht wird mit dem daraus resultierenden schnelleren Erreichen der maximalen Spannkraft.

Im Rahmen der Erfindung ist weiterhin vorgesehen, daß der Konusring auf der den Spannsegmenten zugewandten Seite an seinen beiden axialen Enden zylindrische Abschnitte aufweist, die über einen Kegelabschnitt miteinander verbunden sind. Mit dieser Gestaltung ist der Vorteil verbunden, daß die radiale Lage der Spannsegmente genau definiert ist und eine zu starke Einspannung des Mitnehmers, die ein nachfolgendes Lösen verhindern könnte, vermieden ist. Außerdem bietet sich die Möglichkeit einer Realisierung einer besonders bevorzugten Ausführungsform, die dadurch gekennzeichnet ist, daß der an dem Konusring axial nach vorn ausgebildete zylindrische Abschnitt einen Abstand von dem Mitnehmergewinde aufweist, der beim Spannen einen Eingriff der Zahnreihen in das Mitnehmergewinde erzwingt, aber eine Klemmung vermeidet. Mit dieser Ausführungsform ist der besondere Vorteil verbunden, daß diese nachspannende Eigenschaften hat, also im Bohrbetrieb das Zerspanungsmoment des Bohrers eine Erhöhung der Spannkraft bewirkt. In diesem Zusammenhang ist wichtig, daß der Eingriff der Zahnreihen in das Mitnehmergewinde gewährleistet ist, aber keine Klemmung erfolgt, da diese Klemmung eine Nachspannung verhindern oder dieser entgegenwirken könnte.

Dem Vermeiden einer die Nachspannung behindernde Klemmung dient auch, daß zwischen dem Konusring und/oder der Spannzange und dem Futterkörper ein Dämpfungselement angeordnet ist. Weiterhin ist damit erreicht, daß beim zufälligen Treffen Zahn auf Zahn beim Eingriff der Spannsegmente in die Rillen ein axiales Ausweichen möglich ist.

Um nicht nur eine Nachspannung bereitstellen, sondern auch eine einmal erreichte Spannkraft sichern zu können, ist die Gestaltung so getroffen, daß eine zwischen der Spannhülse und dem Futterkörper wirkende Verriegelungseinrichtung vorgesehen ist mit einem koaxialen Kranz von Sperrausnehmungen und einem Sperrglied, das durch einen mittels Anschläge begrenzte Verdrehung der Spannhülse gegenüber dem Futterkörper zwischen der in die Sperrausnehmungen eingerückten Stellung und der ausgerückten Stellung verstellbar ist, und daß in der eingerückten Stellung die Drehung der Spannhülse gegenüber dem Futterkörper in der dem Spannen entsprechenden Richtung ermöglicht und in der dem Lösen entsprechenden Richtung gesperrt ist. Bei dieser Ausführungsform wird nach Erreichen einer bestimmten Spannkraft durch die begrenzte Verdrehung der Spannhülse gegenüber dem Futterkörper das Sperrglied in die Sperrausnehmungen eingerückt, wodurch eine Verringerung der Spannkraft durch im Bohrbetrieb auftretende Vibrationen verhindert, eine Erhöhung der Spannkraft aber beispielsweise mittels der Nachspanneigenschaften des Schnellspannbohrfutters gewährleistet ist. Vorteilhaft ist dabei, wenn drehfest mit der Spannhülse eine Sperrhülse verbunden ist mit einer dem Sperrglied zugewandten Steuerkurve zur Betätigung des Sperrgliedes, und wenn die Sperrausnehmungen durch eine im Futterkörper ausgebildete koaxiale Sperrverzahnung geeigneter Flankenneigung gebildet sind.

Im folgenden wird die Erfindung an in der Zeichnung dargestellten Ausführungsbeispielen näher erläutert; es zeigen:
- Fig. 1: eine Seitenansicht eines erfindungsgemäßen Schnellspannbohrfutters, links im Schnitt dargestellt,
- Fig. 2: eine der Fig. 1 entsprechende Darstellung einer Ausführungsform mit einem am axial vorderen Ende des Konusringes angeordneten Dämpfungselement,

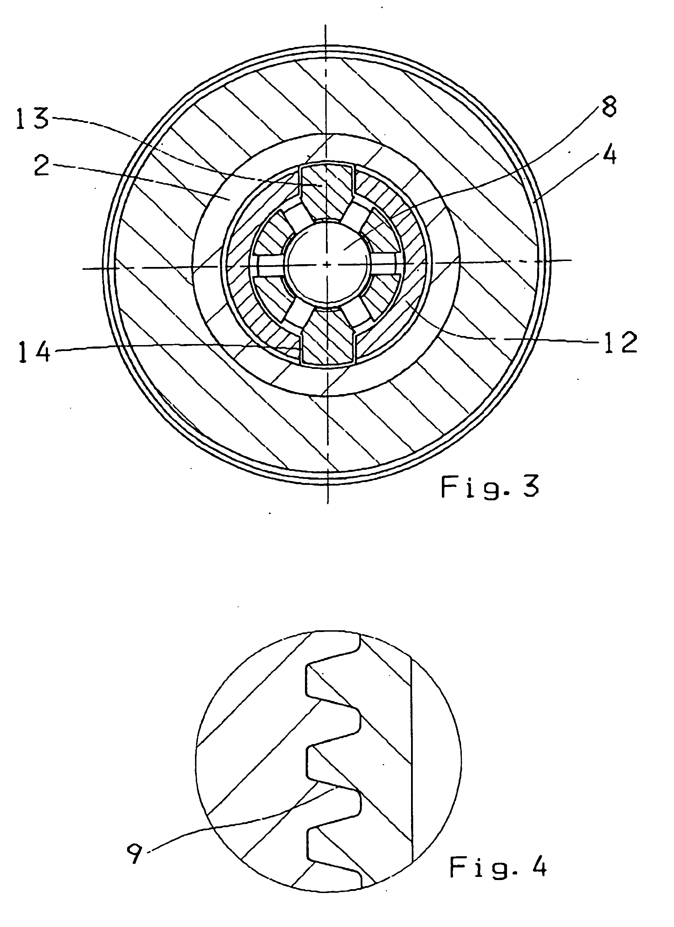

- Fig. 3: den Schnitt III-III aus Fig. 1,
- Fig. 4: das Detail IV aus Fig. 1,
- Fig. 5: eine der Fig. 1 entsprechende Darstellung einer Ausführungsform mit einer Verriegelungseinrichtung,
- Fig. 6: den Schnitt VI-VI aus Fig. 5, und
- Fig. 7: den Schnitt VII-VII aus Fig. 5.

In der Zeichnung dargestellt ist ein Schnellspannbohrfutter 1, das über einen Futterkörper 2 verfügt, an dessen axial rückwärtigem Ende eine Spindelaufnahme 3 ausgebildet ist zur Kopplung mit einer in der Zeichnung nicht dargestellten Spindel einer in der Zeichnung gleichfalls nicht abgebildeten Bohrmaschine. Das Schnellspannbohrfutter 1 weist weiterhin eine gegenüber dem Futterkörper 2 drehbar und axial unverschiebbar gelagerte Spannhülse 4 auf, die eine Werkzeugaufnahme definiert, in die Spannbacken 5 hineinragen, die in geneigt zur Futterachse 6 verlaufenden Führungsschlitzen 7 der Spannhülse 4 radial verschiebbar geführt sind. Die Spannbacken 5 sind an einem Mitnehmer 8 radial verschiebbar gelagert, der koaxial zur Futterachse 6 verstellbar und mittels einer in einem ersten Gewinde 9 gegenüber dem Futterkörper 2 axial verstellbaren Spannzange 10 in seiner axialen Lage feststellbar ist. Die Spannhülse 4 ist über einem der radialen Verstellung der Spannsegmente 11 der Spannzange 10 dienenden Konusring 12 drehschlüssig mit der Spannzange 10 gekoppelt, wobei die Spannzange 10 mit einem Führungszapfen 13 in eine axial orientierte Nut 14 des Konusringes 12 eingreift. Weiterhin besitzt der Konusring 12 am axial vorderen Ende einen Ringbund 15 zur radialen Führung des Mitnehmers 8, der gegen die Kraft einer Feder 16 an dem Konusring 12 abgestützt ist, so daß die Spannbacken 5 stets axial nach vorne gegen die geneigten Führungsschlitze 7 gedrückt werden. Bei den in der Zeichnung dargestellten Ausführugsbeispielen sind an dem Mitnehmer 8 in Umfangsrichtung verlaufende Rillen 17 ausgebildet zum Zusammenwirken mit an den Spannsegmenten 11 ausgebildeten Zahnreihen 18. Dabei sind die Rillen 17 zu einem Mitnehmergewinde 19 zusammengefasst mit einem gegenüber dem ersten Gewinde 9 gleichen Drehsinn, so daß nach dem Eingreifen der Zahnreihen 18 in das Mitnehmergewinde 19 bei fortgesetzter Verdrehung der Spannzange 10 der Mitnehmer 8 auch gegenüber der Spannzange 10 spindelt und so das Andrücken der Spannbacken 5 in die Führungsschlitze 7 der Spannhülse 4 fördert.

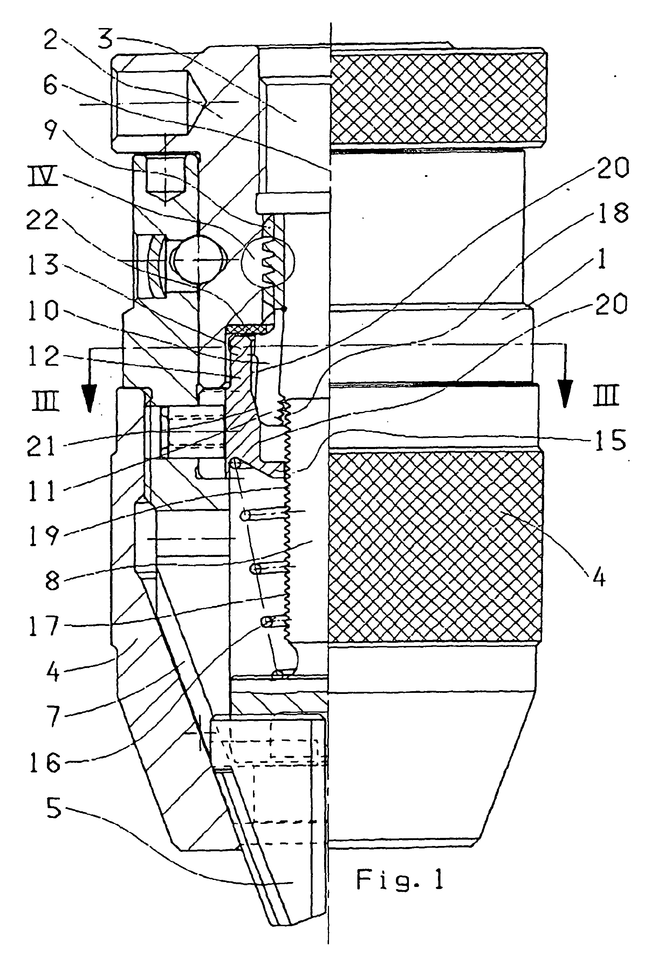

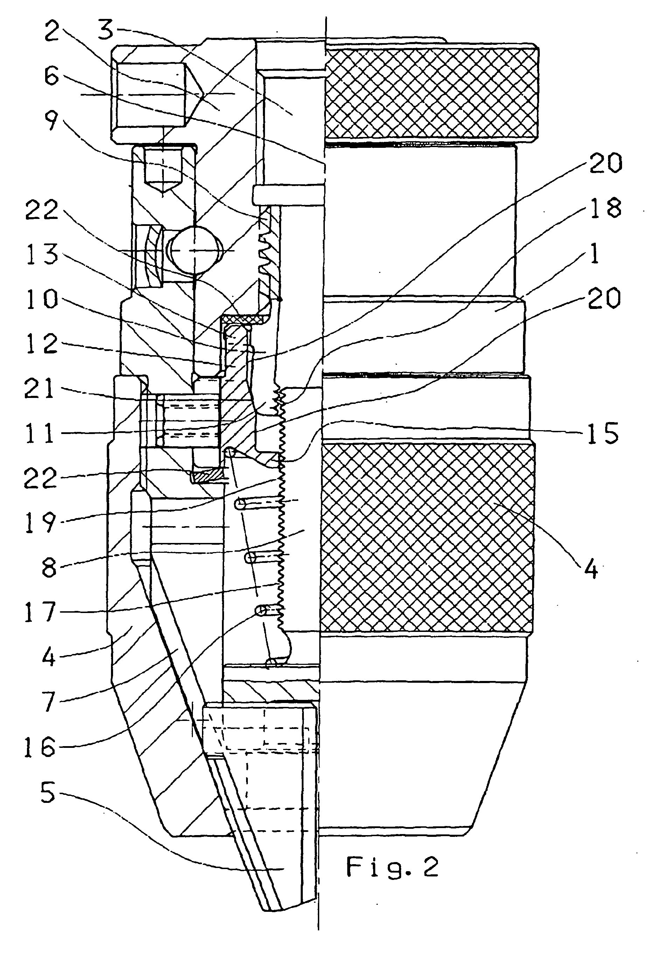

Wie insbesondere aus den Figuren 1 und 2 zu erkennen ist, weist der Konusring 12 auf der den Spannsegmenten 11 zugewandten Seite an seinen beiden axialen Enden zylindrische Abschnitte 20 auf, die über einen Kegelabschnitt 21 miteinander verbunden sind. Dabei besitzt der an dem Konusring 12 axial vorn ausgebildete zylindrische Abschnitt 20 einen Abstand von dem Mitnehmergewinde 19, der beim Spannen einen Eingriff der Zahnreihen 18 in das Mitnehmergewinde 19 erzwingt, aber eine Klemmung vermeidet, so daß sich daraus eine nachspannende Eigenschaft des Schnellspannbohrfutters 1 ergibt, weil im Bohrbetrieb auftretende Zerspanungsmomente über die Spannbacken 5 und den mit diesen verbundenen Mitnehmer 8 dessen Verdrehung gegenüber der Spannzange 10 bewirken können. Um dabei einer der Nachspannung entgegenstehenden Klemmung entgegen zu wirken, ist zwischen dem Konusring 12 und dem Futterkörper 2 ein Dämpfungselement 22 angeordnet, daß sowohl am axial rückwärtigen als auch am axial vorderen Ende des Konusringes 12 positioniert sein kann.

Beim Öffnen des Schnellspannbohrfutters 1 wird ausgenutzt, daß beim Schließen eine Auslenkung der Spannsegmente 11 erfolgt, die wieder in ihre Ruhelage zurückkehren, wenn der Konusring 12 mit seinen Steuerkurven dies zuläßt.

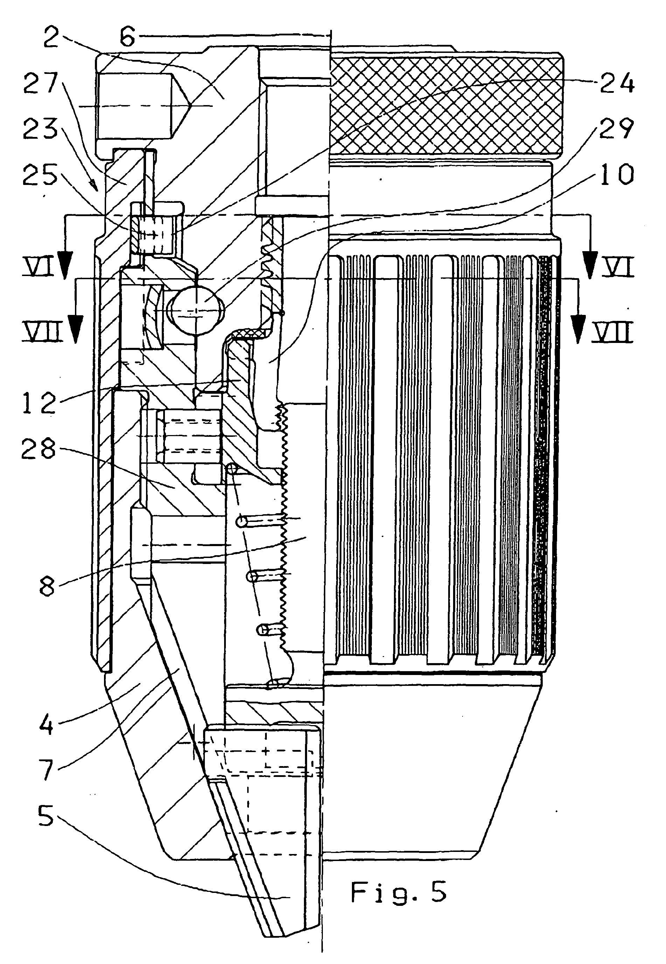

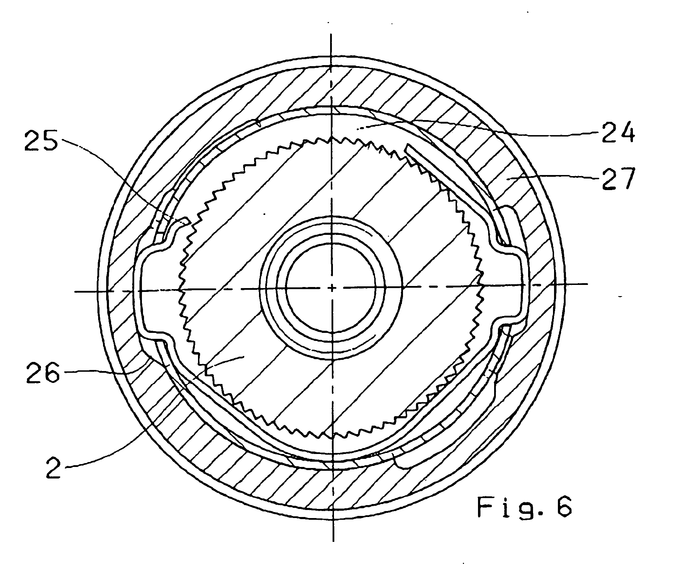

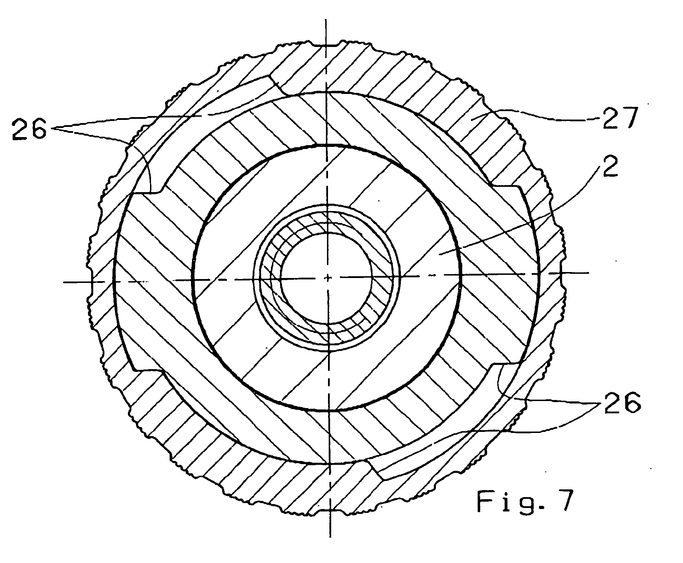

Bei dem Ausführungsbeispiel aus den Figuren 5 bis 7 ist eine zwischen der Spannhülse 4 und dem Futterkörper 2 wirkende Verriegelungseinrichtung 23 realisiert mit einem koaxialen Kranz von Sperrausnehmungen 24 und einem Sperrglied 25, das durch eine mittels Anschläge 26 begrenzte Verdrehung der Spannhülse 4 gegenüber dem Futterkörper 2 zwischen der in die Sperrausnehmungen 24 eingerückten Stellung und der ausgerückten Stellung verstellbar ist, wobei in der eingerückten Stellung die Drehung der Spannhülse 4 gegenüber dem Futterkörper 2 in der dem Spannen entsprechenden Richtung ermöglicht und in der dem Lösen entsprechenden Richtung gesperrt ist. Die Sperrausnehmungen 24 sind durch eine am Futterkörper 2 ausgebildete koaxiale Sperrverzahnung geeigneter Flankenneigung gebildet, also einer Flankenneigung, die ein Gleiten des Sperrgliedes 25 über die Sperrzähne in der dem Spannen entsprechenden Richtung ermöglicht, aber aufgrund der Steilheit der gegenüberliegenden Zahnflanken eine Verdrehung der Spannhülse 4 in der dem Lösen entsprechenden Richtung unterdrückt, solange nicht die Spannhülse 4 gegenüber dem Futterkörper 2 zum Öffnen des Schnellspannbohrfutters 1 an den Anschlag 26 verstellt ist, der ein Ausrücken des Sperrgliedes 25 aus der Sperrverzahnung ermöglicht. Figur 5 zeigt, daß zur einfachen Montage des Schnellspannbohrfutters 1 sowie zur Bereitstellung einer dem Sperrglied 25 zugewandten Steuerkurve 26 drehfest mit der Spannhülse 4 eine Sperrhülse 27 verbunden ist, in der die Steuerkurve 26 ausgebildet ist.

Aus den Figuren 1 und 5 erkennbar ist auch, daß, wiederum aus Gründen der kostengünstigeren Fertigung und einfacheren Montage, die Spannhülse 4 gegenüber dem Futterkörper 2 an einer Zwischenhülse 28 gelagert ist, die über ein Kugellager 29 drehbar und axial unverschiebbar mit dem Futterkörper 2 verbunden ist.

## Patentansprüche

1. Schnellspannbohrfutter mit einem eine Spindelaufnahme (3) aufweisenden Futterkörper (2), und einer gegenüber dem Futterkörper (2) axial unverschiebbar gelagerten Spannhülse (4), in der in geneigt zur Futterachse (6) verlaufenden Führungsschlitzen (7) Spannbacken (5) geführt sind, die an einem Mitnehmer (8) gelagert sind, der koaxial zur Futterachse (6) verstellbar und mittels einer in einem ersten Gewinde (9) gegenüber dem Futterkörper (2) axial verstellbaren Spannzange (10) in seiner axialen Lage feststellbar ist, und mit einem der radialen Verstellung der Spannsegmente (11) der Spannzange (10) dienenden Konusring (12), **dadurch gekennzeichnet, dass** die Spannhülse (4) verdrehbar gegenüber dem Futterkörper (2) gelagert und drehschlüssig mit der Spannzange (10) gekoppelt ist, wobei zur drehschlüssigen Kopplung der Spannhülse (4) mit der Spannzange (10) der Konusring (12) vorgesehen ist.

2. Schnellspannbohrfutter nach Anspruch 1, **dadurch gekennzeichnet, dass** die Spannzange (10) mit einem Führungszapfen (13) in eine axial orientierte Nut (14) des Konusringes (12) eingreift.

3. Schnellspannbohrfutter nach Anspruch 1 oder 2, **dadurch gekennzeichnet, dass** der Mitnehmer (8) gegen die Kraft einer Feder (16) axial nach hinten, vorzugsweise an dem Konusring (12) abgestützt ist.

4. Schnellspannbohrfutter nach einem der Ansprüche 1 bis 3, **dadurch gekennzeichnet, dass** der Konusring (12) am axial vorderen Ende einen Ringbund (15) zur radialen Führung des Mitnehmers (8) aufweist.

5. Schnellspannbohrfutter nach einem der Ansprüche 1 bis 4, **dadurch gekennzeichnet, dass** an dem Mitnehmer (8) in Umfangsrichtung verlaufende Rillen (17) ausgebildet sind zum Zusammenwirken mit an den Spannsegmenten (11) ausgebildeten Zahnreihen (18).

6. Schnellspannbohrfutter nach Anspruch 5, **dadurch gekennzeichnet, dass** die Rillen (17) zu einem Mitnehmergewinde (19) zusammengefasst sind mit einem gegenüber dem ersten Gewinde (9) gleichen Drehsinn.

7. Schnellspannbohrfutter nach Anspruch 5 oder 6, **dadurch gekennzeichnet, dass** der Konusring (12) auf der den Spannsegmenten (11) zugewandten Seite an seinen beiden axialen Enden zylindrische Abschnitte (20) aufweist, die über einen Kegelabschnitt (21) miteinander verbunden sind.

8. Schnellspannbohrfutter nach Anspruch 7, **dadurch gekennzeichnet, dass** der an dem Konusring (12) axial vorn ausgebildete zylindrische Abschnitt (20) einen Abstand von dem Mitnehmergewinde (19) aufweist, der beim Spannen einen Eingriff der Zahnreihen (18) in das Mitnehmergewinde (19) erzwingt, aber eine Klemmung vermeidet.

9. Schnellspannbohrfutter nach einem der Ansprüche 1 bis 8, **dadurch gekennzeichnet, dass** zwischen dem Konusring (12) und/oder der Spannzange (10) und dem Futterkörper (2) ein Dämpfungselement (22) angeordnet ist.

10. Schnellspannbohrtutter nach einem der Ansprüche 1 bis 9, **dadurch gekennzeichnet, dass** eine zwischen der Spannhülse (4) und dem Futterkörper (2) wirkende Verriegelungseinrichtung (23) vorgesehen ist mit einem koaxialen Kranz von Sperrausnehmungen (24) und einem Sperrglied (25), das durch eine mittels Anschlägen (26) begrenzte Verdrehung der Spannhülse (4) gegenüber dem Futterkörper (2) zwischen der in die Sperrausnehmungen (24) eingerückten Stellung und der ausgerückten Stellung verstellbar ist, und dass in der eingerückten Stellung die Drehung der Spannhülse (4) gegenüber dem Futterkörper (2) in der dem Spannen entsprechenden Richtung ermöglicht und in der dem Lösen entsprechenden Richtung gesperrt ist.

11. Schnellspannbohrfutter nach Anspruch 10, **dadurch gekennzeichnet, dass** drehfest mit der Spannhülse (4) eine Sperrhülse (27) verbunden ist mit einer dem Sperrglied (25) zugewandten Steuerkurve (26) zur Betätigung des Sperrgliedes (25), und dass die Sperrausnehmungen (24) durch eine am Futterkörper (2) ausgebildete koaxiale Sperrverzahnung geeigneter Flankenneigung gebildet sind.

## Claims

1. Quick-acting drill chuck with a chuck body (2) having a spindle receptacle (3), and a sleeve (4) mounted in bearings such that it cannot slide axially relative to the chuck body (2), in which chuck jaws (5) are guided in guide slots (7) inclined to the chuck axis (6) and mounted on a carrier (8), which is adjustable concentrically relative to the chuck axis (6) and by means of a collet chuck (10) in a first thread (9), axially adjustable relative to the chuck body (2), is adjustable in its axial position, and with a conical ring (12), which serves to provide the radial adjustment of the clamping segments (11) of the collet chuck (10), **characterized in that** the sleeve (4) is mounted such that that it can rotate relative to the chuck body (2) and is coupled in rotation with the collet chuck (10), whereby the conical ring (12) is provided for the coupled rotation of the sleeve (4) with the collet chuck (10).

2. Quick-acting drill chuck according to claim 2, **characterized in that** the collet chuck (10) engages with a spigot (13) in an axially oriented slot (14) of the conical ring (12).

3. Quick-acting drill chuck according to claim 1 or 2, **characterized in that** the carrier (8) is supported at the back against the force of a spring (16), preferably on the conical ring (12).

4. Quick-acting drill chuck according to one of the claims 1 to 3, **characterized in that** the conical ring (12) has a collar (15) on its front axial end for the radial guidance of the carrier (8).

5. Quick-acting drill chuck according to one of the claims 1 to 4, **characterized in that** there are grooves (17) running in the circumferential direction, formed on the carrier (8), to act in conjunction with the rows of teeth (18) formed on the clamping segments (11).

6. Quick-acting drill chuck according to claim 5, **characterized in that** the grooves (17) are formed as a carrier thread (19), with the same sense of rotation as that of the first thread (9).

7. Quick-acting drill chuck according to claim 5 or 6, **characterized in that** the conical ring (12) has cylindrical sections (20) on both of its axial ends on the side facing the clamping segments (11), which are connected together via a conical section (21).

8. Quick-acting drill chuck according to claim 7, **characterized in that** the cylindrical section (20) formed at the front axial end of the conical ring (12) is separated from the carrier thread (19) by a distance, which is such that during clamping, engagement of the row of teeth (18) in the carrier thread (19) is compelled to take place, but with the avoidance of a clamping action between the two.

9. Quick-acting drill chuck according to one of the claims 1 to 8, **characterized in that** between the conical ring (12) and/or the collet chuck (10) and the chuck body (2) there is a damping element (22).

10. Quick-acting drill chuck according to one of the claims 1 to 9, **characterized in that** a locking device (23) is provided between the sleeve (4) and the chuck body (2) with a coaxial ring of latching recesses (24) and a latching component (25), which can be adjusted by a rotation of the sleeve (4) relative to the chuck body (2) between the engaged position in the latching recesses (24) and the unlatched position, which is limited by means of stops (26), and that in the engaged position the rotation of the sleeve (4) relative to the chuck body (2) enables the corresponding direction for clamping to be achieved, while the direction corresponding to the releasing action is blocked.

11. Quick-acting drill chuck according to claim 10, **characterized in that** a latching sleeve (27) is connected to and restrained to rotate with the sleeve (4) with a control curve (26) facing the latching component (25) to actuate the latching component (25), and that the latching recesses (24) take the form of a coaxial latching toothed component on the chuck body (2) with a suitable flank inclination.

## Revendications

1. Mandrin porte-foret à serrage rapide, comprenant un corps de mandrin (2), doté d'un logement de broche (3), et une douille de serrage (4), qui est montée sans possibilité de déplacement axial par rapport au corps de mandrin (2) et dans laquelle des mors de serrage (5) sont guidés dans des fentes de guidage (7), inclinées par rapport à l'axe de mandrin (6), et sont montés sur un entraîneur (8) qui peut être déplacé coaxialement à l'axe de mandrin (6) et peut être bloqué dans sa position axiale au moyen d'une pince de serrage (10) pouvant être déplacée axialement dans un premier filetage (9) par rapport au corps de mandrin (2), et comprenant une bague conique (12) destinée au déplacement radial des segments de serrage (11) de la pince de serrage (10), **caractérisé en ce que** la douille de serrage (4) est montée avec possibilité de rotation par rapport au corps de mandrin (2) et est couplée avec liaison d'entraînement en rotation à la pince de serrage (10), la bague conique (12) étant prévue pour le couplage solidaire en rotation de la douille de serrage (4) à la pince de serrage (10).

2. Mandrin porte-foret à serrage rapide selon la revendication 1, **caractérisé en ce que** la pince de serrage (10) s'engage avec un doigt de guidage (13) dans une rainure (14), orientée dans la direction axiale, de la bague conique (12).

3. Mandrin porte-foret à serrage rapide selon la revendication 1 ou 2, **caractérisé en ce que** l'entraîneur (8) est en appui axial à l'arrière, à l'encontre de la force d'un ressort (16), de préférence sur la bague conique (12).

4. Mandrin porte-foret à serrage rapide selon une des revendications 1 à 3, **caractérisé en ce que** la bague conique (12) présente à son extrémité axiale avant un collet annulaire (15) destiné au guidage radial de l'entraîneur (8).

5. Mandrin porte-foret à serrage rapide selon une des revendications 1 à 4, **caractérisé en ce que** des rainures (17) sont réalisées dans la direction périphérique sur l'entraîneur (8), aux fins de coopérer avec des rangées de dents (18) façonnées sur les segments de serrage (11).

6. Mandrin porte-foret à serrage rapide selon la revendication 5, **caractérisé en ce que** les rainures (17) sont réunies pour former un filetage d'entraînement (19), avec un sens de rotation qui est identique à celui du premier filetage (9).

7. Mandrin porte-foret à serrage rapide selon la revendication 5 ou 6, **caractérisé en ce que**, sur la face tournée vers les segments de serrage (11), la bague conique (12) présente à ses deux extrémités axiales des parties cylindriques (20) qui sont reliées l'une à l'autre par une partie conique (21).

8. Mandrin porte-foret à serrage rapide selon la revendication 7, **caractérisé en ce que** la partie cylindrique (20) réalisée axialement à l'avant de la bague conique (12) présente une distance par rapport au filetage d'entraînement (19) qui, lors du serrage, impose l'engagement des rangées de dents (19) dans le filetage d'entraînement (19), tout en évitant un coincement.

9. Mandrin porte-foret à serrage rapide selon une des revendications 1 à 8, **caractérisé en ce qu'**un élément amortisseur (22) est disposé entre la bague conique (12) et/ou la pince de serrage (10) et le corps de mandrin (2).

10. Mandrin porte-foret à serrage rapide selon une des revendications 1 à 9, **caractérisé en ce qu'**il est prévu un dispositif de verrouillage (23) qui agit entre la douille de serrage (4) et le corps de mandrin (2) et comprend une couronne coaxiale d'échancrures d'encliquetage (24) et un organe d'encliquetage (25) qui, du fait d'une rotation, limitée par des butées (26), de la douille de serrage (4) par rapport au corps de mandrin (2), peut être déplacé entre la position engagée dans les échancrures d'encliquetage (24) et la position dégagée, et **en ce que** dans la position engagée, la rotation de la douille de serrage (4) par rapport au corps de mandrin (2) est possible dans le sens correspondant au serrage et est bloquée dans le sens correspondant au desserrage.

11. Mandrin porte-foret à serrage rapide selon la revendication 10, **caractérisé en ce qu'**une douille de blocage (27) est solidaire en rotation de la douille de serrage (4) et comporte une came de commande (26) tournée vers l'organe d'encliquetage (25), pour actionner ledit organe d'encliquetage (25), et **en ce que** les échancrures d'encliquetage (24) sont constituées d'une denture d'encliquetage coaxiale réalisée sur le corps de mandrin (2), avec une pente de flanc appropriée.
